# EUROPÄISCHE PATENTSCHRIFT

(11) **EP 0 248 268 B1**
(45) Veröffentlichungstag und Bekanntmachung des Hinweises auf die Patenterteilung: **31.03.1993**
(21) Anmeldenummer: 87107288.0
(22) Anmeldetag: 19.05.1987
(51) Int. Cl.: G06F 11/26

(54) **Verfahren zur Simulation eines Verzögerungsfehlers in einer Logikschaltung und Anordnungen zur Durchführung des Verfahrens**
Logic circuit delay error simulation method, and arrangments for carrying out said method
Procédé de simulation d'une erreur de retard dans un circuit logique et dispositifs pour la réalisation dudit procédé

(30) Priorität: 06.06.1986 DE 3619023
(43) Veröffentlichungstag der Anmeldung: 09.12.1987
(73) Patentinhaber: SIEMENS AKTIENGESELLSCHAFT, 80333 München (DE)
(72) Erfinder: Köppe, Siegmar, Dipl.-Ing., D-3014 Laatzen (DE)

(56) Entgegenhaltungen:
- US-A- 3 633 100
- THE BELL SYSTEM TECHNICAL JOURNAL, Band 57, Nr. 5, Mei-Juni 1978, Seiten 1449-1474, American Telephone and Telegraph Co., US; R.L. WADSACK: "Fault modeling and logic simulation of CMOS and MOS integrated circuits"
- IEEE DESIGN & TEST OF COMPUTERS, Band 2, Nr. 2, 2. April 1985, IEEE, New York, US; J.P. HAYES: "Fault modeling, D&T tutorial"
- DIGEST OF PAPERS, 1980 TEST CONFERENCE, New York, 11.-13. November 1980, "Paper" 7.3, Seiten 167-175, IEEE, New York, US; C.-C. LIAW et al.: "Test generation for delay faults using stuck-at-fault test set"

## Beschreibung

Die Erfindung bezieht sich auf ein Verfahren zur Simulation eines Verzögerungsfehlers in einer Logikschaltung nach dem Oberbegriff des Patentanspruchs 1 und auf Anordnungen zur Durchführung des Verfahrens wie in Patentansprüchen 3 und 4 definiert.

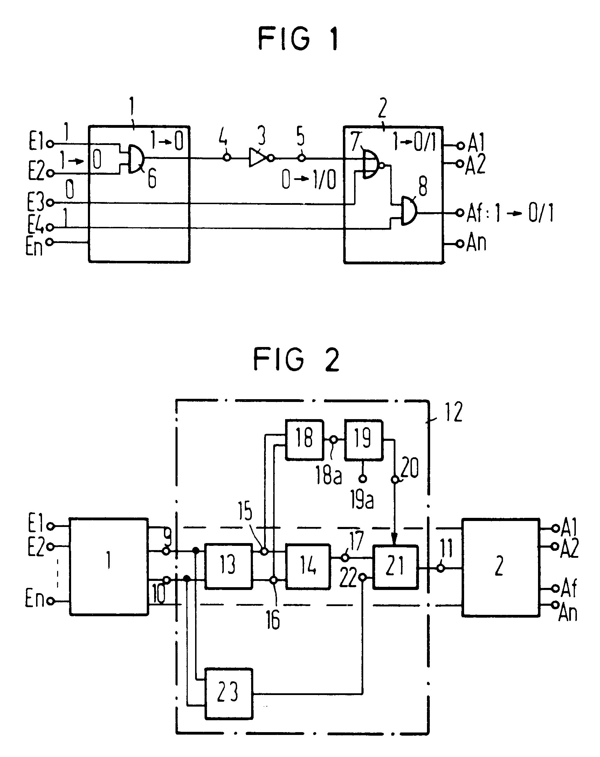

Ein schwer erkennbarer oder simulierbarer Fehler einer Logikschaltung sei anhand von Fig. 1 näher betrachtet. Hierbei wird von einer digitalen Schaltung ausgegangen, die einen eingangsseitigen Teil 1 und einen ausgangsseitigen Teil 2 enthält. Der Teil 1 weist eine Reihe von digitalen Eingängen E1...En auf, der Teil 2 eine Reihe von digitalen Ausgängen A1...An. Eine auf ihre Funktionsfähigkeit zu prüfende Logikschaltung, z.B. ein Inverter 3, ist über ihren Eingang mit einem Ausgang 4 des Teils 1 und über ihren Ausgang mit einem Eingang 5 des Teils 2 der digitalen Schaltung verbunden. Im Ausgangszustand der Schaltung liege an den Eingängen E1, E2 E3 und E4 ein Bitmuster 1, 1, 0, 1 an, wobei sich am Ausgang 4 eines UND-Gatters 6 und somit am Eingang des Inverters 3 eine logische "1" ergibt. Der Ausgang des Inverters 3 liegt dementsprechend auf "0", ebenso wie der erste Eingang eines NOR-Gatters 7, das im Schaltungsteil 2 der digitalen Schaltung angeordnet ist. Der zweite Eingang von 7 ist über den Eingang E3 mit einer "0" beschaltet, so daß über den Ausgang von 7 eine "1" an den ersten Eingang eines UND-Gatters 8 gelegt wird, dessen zweiter Eingang über E4 mit einer "1" belegt ist. Über den Ausgang von 8 wird dementsprechend eine "1" an den Ausgang Af abgegeben. Wird nun anschließend ein zweites Eingangsmuster 1, 0, 0, 1 bei E1 bis E4 angelegt, so ergeben sich an den Schaltungspunkten 4, 5, dem Ausgang von 7 und dem digitalen Ausgang Af jeweils die logischen Signale "0", "1", "0" und "0", wie auch in der Zeichnung angedeutet ist.

Wesentlich ist jedoch, daß die eingangsseitigen Bitmuster periodisch, und zwar jeweils zu Beginn einzelner aufeinanderfolgender Taktperioden, bei E1...En angelegt werden. Ebenso werden die aus diesen über die Teile 1, 3 und 2 abgeleiteten Ausgangsmuster jeweils zu Beginn der nächstfolgenden Abtastperioden an den Ausgängen A1...An abgefragt bzw. bewertet. Der Inverter kann nun den Fehler aufweisen, daß einer seiner Schaltungszweige eine unzulässig niedrige Leitfähigkeit besitzt. Ursache hierfür kann bei einer in integrierter Schaltkreistechnik ausgeführten Schaltung z.B. eine zu hochohmige Kontaktierung, eine Leiterbahnverengung oder eine Einsatzspannungsverschiebung eines Feldeffekttransistors sein. Unter der Annahme, daß dieser Fehler in dem den Inverterausgang mit einem Anschluß der Versorgungsspannung verbindenden Schaltungszweig (pull-up-Pfad) vorhanden ist, ergeben sich für die abgeleiteten Ausgangsbitmuster folgende Auswirkungen: Zu Beginn einer bestimmten, ersten Taktperiode wird der im genannten Ausgangszustand befindlichen Schaltung über die Eingänge E1 bis E4 das Eingangsmuster 1, 0, 0, 1 zugeführt. Damit wird an den Invertereingang eine logische "0" angelegt. Der Ausgang eines fehlerfreien Inverters würde nun innerhalb dieser Taktperiode von "0" auf "1" umgeladen werden. Durch den genannten Fehler erfolgt aber das Umladen des Inverterausgangs so langsam, daß sein Potential zum Bewertungszeitpunkt, d.h. zu Beginn der nachfolgenden, zweiten Taktperiode, von den mit dem Inverterausgang verbundenen Schaltungsteilen 7, 8 und Af noch als "0" bewertet wird. Dabei ergeben sich die Signalabweichungen, die in Fig. 1 an den betreffenden Schaltungspunkten jeweils hinter den Schrägstrichen angedeutet sind. Am digitalen Schaltungsausgang Af ist der Signalfehler dadurch zu erkennen, daß anstelle der erwarteten "0" eine "1" auftritt. Sofern der Invertereingang in der genannten zweiten Taktperiode wieder mit einer "0" belegt wird, kann der verzögerte Umladevorgang dann in dieser Taktperiode abgeschlossen werden. Das bedeutet, daß der Inverterausgang um eine Taktperiode verzögert auf "1" umgeschaltet wird. Der fehlerhaft verlangsamte Signalwechsel am Inverterausgang ist also am digitalen Schaltungsausgang Af nur während der ersten Taktperiode erkennbar.

Tritt der beschriebene Fehler, der auch als ein lokaler Verzögerungsfehler bezeichnet werden kann, in einer allgemeinen, auf ihre Funktionsfähigkeit zu prüfenden Logikschaltung auf, die z.B. zwischen einer Mehrzahl von Ausgängen des Teiles 1 und einer Mehrzahl von Eingängen des Teils 2 der digitalen Schaltung von Fig. 1 angeordnet ist, so müssen für die Zwecke der Fehlererkennung zwei Eingangsbitmuster nacheinander zugeführt werden. Von diesen wird das erste, in einer ersten Taktperiode angelegte Bitmuster als Initialisierungsmuster bezeichnet, das zweite, in der darauffolgenden Taktperiode angelegte Muster als fehlererkennendes Muster. Für das obengenannte Beispiel eines fehlerbehafteten Inverters weist ein mögliches Initialisierungsmuster die Bits 1, 1,0, 1 für die Eingänge E1 bis E4 auf, während ein fehlererkennendes Muster diese Eingänge mit den Bits 1, 0, 0, 1 belegt. Der lokale Verzögerungsfehler ist auch bei der Prüfung einer allgemeinen Logikschaltung nur in einer einzigen Taktperiode erkennbar.

Bei einem Simulationsverfahren wird nun so vorgegangen, daß die zu prüfende Logikschaltung durch ein Simulationsmodell nachgebildet wird, das entsprechend der realen Logikschaltung zwischen die Schaltungsteile 1 und 2 der digitalen Schaltung eingefügt wird. In diesem Simulationsmodell ist ein bestimmter lokaler Verzögerungsfehler enthalten. In einer Mehrzahl von aufeinanderfolgenden Taktperioden wird sodann eine Folge von n-stelligen Bitmustern an E1...En angelegt. An den Ausgängen A1...An erscheinen jeweils die über den Schaltungsteil 1, das Simulationsmodell und den Schaltungsteil 2 abgeleiteten Ausgangsmuster, die registriert und mit Sollmustern verglichen werden, welche für den fehlerfreien Fall maßgeblich sind. Jedes Eingangsbitmuster, das zu einem Ausgangsmuster führt, das in wenigstens einem Bit von dem entsprechenden Sollmuster abweicht, ist als ein fehlererkennendes Muster qualifiziert. Wird ein auf diese Weise ermitteltes fehlererkennendes Muster der zu prüfenden digitalen Schaltung zugeführt, in der das Simulationsmodell durch eine entsprechende, realisierte Logikschaltung ersetzt ist, so kann man für den Fall, daß bei A1...An ein Ausgangsmuster auftritt, das dem im Simulationsverfahren infolge des simulierten Fehlers aufgetretenen Muster entspricht, auf das Vorhandensein des simulierten Verzögerungsfehlers in der realen logischen Schaltung schließen.

Aus Dockument "DIGEST OF PAPERS, 1980 TEST CONFERENCE, N.-Y., 11-13 Septembre 1980, Paper 7.3, Seiten 167 bis 175, IEEE, N.-Y., U.S, CHI-CHANG LIAW et al., ist bekannt zur Simulation eines Verzögerungsfehlers einer Logikschaltung ein Simulationsmodell zur Simulation eines Unterbrechungsfehlers der Schaltung zu verwenden.

Der Erfindung liegt die Aufgabe zugrunde, ein Verfahren der eingangs genannten Art anzugeben, mit dem ein lokaler Verzögerungsfehler einer Logikschaltung in einfacher Weise simuliert werden kann. Das wird erfindungsgemäß durch eine Ausbildung nach dem kennzeichnenden Teil des Patentanspruchs 1 erreicht.

Der mit der Erfindung erzielbare Vorteil liegt insbesondere darin, daß zur Simulation eines lokalen Verzögerungsfehlers von bekannten Anordnungen ausgegangen werden kann, die zur Simulation von Unterbrechungsfehlern dienen, wobei diese Anordnungen mit geringem Aufwand soweit ergänzt werden können, daß sie zur Simulation eines lokalen Verzögerungsfehlers geeignet sind.

Der Patentanspruch 2 ist auf eine bevorzugte Ausgestaltung des Verfahrens nach der Erfindung gerichtet. Die Patentansprüche 3 bis 7 betreffen vorteilhafte Anordnungen zur Durchführung des erfindungsgemäßen Verfahrens.

Die Erfindung wird nachfolgend anhand von in der Zeichnung dargestellten bevorzugten Simulationsmodellen, die zur Durchführung des erfindungsgemäßen Verfahrens geeignet sind, näher erläutert. Dabei zeigt:
- Fig. 1: eine schematische Darstellung einer digitalen Schaltung, die eine mit einem lokalen Verzögerungsfehler behaftete Logikschaltung als Teilschaltung enthält,
- Fig. 2: die Grundschaltung eines ersten nach der Erfindung ausgebildeten Simulationsmodells,
- Fig. 3: die Grundschaltung eines zweiten nach der Erfindung ausgebildeten Simulationsmodells,
- Fig. 4: eine bevorzugte schaltungstechnische Durchbildung einer Teilschaltung von Fig. 2 oder Fig. 3,
- Fig. 5: eine bevorzugte schaltungstechnische Durchbildung einer anderen Teilschaltung von Fig. 2 oder Fig.3 und
- Fig. 6: einen Teil eines Simulationsmodells für die Überprüfung eines NAND-Gatters auf das Vorhandensein eines lokalen Verzögerungsfehlers.

In Fig. 2 ist eine auf das Vorliegen eines lokalen Verzögerungsfehlers zu prüfende Logikschaltung, die über ihre Eingänge mit Ausgängen 9 und 10 des Teils 1 und über ihren Ausgang mit dem Eingang 11 des Teils 2 einer digitalen Schaltung verbunden ist, durch ein nach der Erfindung ausgebildetes Simulationsmodell 12 nachgebildet. Das letztere enthält eine Nachbildungsstufe 13, die in Verbindung mit einer nachgeschalteten Ausgangsstufe 14 die Logikschaltung so nachbildet, als ob sie nicht einen Schaltungszweig mit einem unzulässig niedrigen Leitwert enthalten würde, sondern einen Schaltungszweig mit einem Unterbrechungsfehler. Ein solcher Unterbrechungsfehler ruft an einem Schaltungspunkt der Logikschaltung eine Signalspeicherung hervor. Setzt man nämlich voraus, daß dieser Schaltungspunkt eine Kapazität hinreichender Größe aufweist, so z.B. wenn er gleichzeitig den mit einer Gatekapazität behafteten Eingang einer nachfolgenden Feldeffekttransistorstufe darstellt, und tritt eine durch den Unterbrechungsfehler bedingte Isolation des Schaltungspunktes gegenüber dem vorgeordneten, treibenden Teil der Logikschaltung auf, so bleibt der beim Wirksamwerden des Unterbrechungsfehlers jeweils vorhandene Ladungszustand der Kapazität bestehen.

Dieser Effekt einer Ladungsspeicherung wird durch eine Ausgangsstufe 14 berücksichtigt, die mit ihren beiden Eingängen an zwei Ausgänge 15, 16 der Nachbildungsstufe 13 geschaltet ist. Der Ausgang von 14 ist mit 17 bezeichnet. Die Ausgangsstufe 14 hat die Funktion, daß sie jedes durch den in 13 simulierten Unterbrechungsfehler nicht beeinflußte Signal, das am Ausgang 15 von 13 auftritt, auf ihren Ausgang 17 durchschaltet, dagegen beim Auftreten eines von dem simulierten Fehler beeinflußten Signals nicht dieses Signal durchschaltet, sondern die Durchschaltung des letzten Signals, das vor dem Auftreten des fehlerbeeinflußten Signals an 15 aufgetreten war, weiter aufrecht erhält. Die Steuerung der Ausgangsstufe 14 erfolgt in Abhängigkeit von den an den Ausgängen 15 und 16 der Nachbildungsstufe 13 auftretenden Signalen. Die Nachbildungsstufe 13 ist dabei so ausgebildet, daß immer dann, wenn an beiden Ausgängen 15 und 16 jeweils eine logische "0" erscheint, ein durch den Unterbrechungsfehler beeinflußtes Signal vorhanden ist.

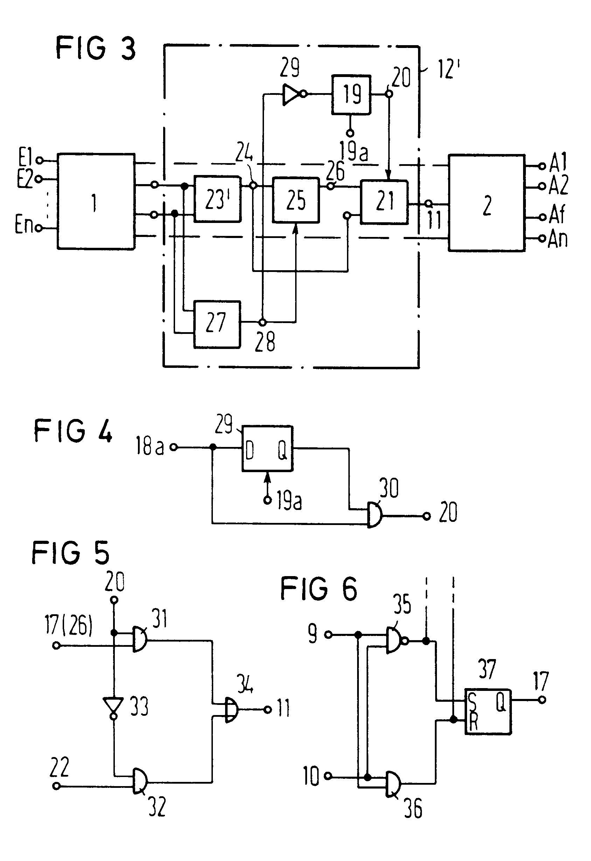

In den Proc. of 20th Design Automation Conf. 1983 sind auf den Seiten 64 - 70 einige mit Unterbrechungsfehlern behaftete Gatterschaltungen und die entsprechenden Nachbildungsstufen einschließlich der zugehörigen Ausgangsstufen beschrieben und dargestellt. Beispielsweise zeigt die Fig. 1 dieser Veröffentlichung ein CMOS-Gatter und die Fig. 3 die entsprechende Nachbildungs- und Ausgangsstufe. In Fig. 3 dieser Veröffentlichung ist die Ausgangsstufe 14 als ein logischer Block B bezeichnet, dessen Funktionstabelle, die der Tabelle I auf Seite 65 zu entnehmen ist, mit der eines RS-Flipflops übereinstimmt.

In einem Detektor 18, der mit seinen beiden Eingängen an die Ausgänge 15 und 16 gelegt ist, wird geprüft, ob sich die Nachbildungsstufe 13 in einem Schaltzustand befindet, bei dem sowohl an 15 als auch an 16 eine logische "0" auftritt. Ist das der Fall, so wird am Ausgang 18a von 18 eine logische "1" abgegeben. Dabei kann der Detektor 18 beispielsweise aus einem NOR-Gatter bestehen. Das Ausgangssignal von 18 wird einem Auswerter 19 zugeführt, dessen Takteingang 19a mit Taktimpulsen belegt ist, die jeweils zu Beginn der einzelnen Taktperioden auftreten. Der Auswerter 19 prüft, ob die Signalkombination 0, 0 über die Ausgänge 15 und 16 der Nachbildungsstufe 13 während zweier aufeinanderfolgender Taktperioden abgegeben wird. Tritt die Signalkombination 0, 0 nicht odernur während einer einzigen Taktperiode auf, so wird über den Ausgang 20 von 19 eine logische "1" abgegeben, die dem Steuereingang eines Multiplexers 21 zugeführt wird. Tritt die Signalkombination 0, 0 an den Ausgängen 15 und 16 aber während zweier aufeinanderfolgender Taktperioden auf, so gibt der Auswerter 19 am Ausgang 20 eine logische "0" ab. Der Multiplexer 21 schaltet nun beim Empfang eines Steuersignals "1" die Signale an seinem ersten Eingang, der mit dem Ausgang 17 beschaltet ist, auf seinen Ausgang 11 durch. Beim Auftreten eines Steuersignals "0" werden dagegen die an 17 anliegenden Signale vom Ausgang 11 abgeschaltet und statt dessen die Signale, die an seinem Eingang 22 anliegen, auf 11 durchgeschaltet. Der Eingang 22 ist dabei mit dem Ausgang einer fehlerfreien Nachbildung 23 verbunden, die parallel zur Nachbildungsstufe 13 angesteuert wird und so ausgebildet ist, daß sie die Funktion der zu überprüfenden Logikschaltung fehlerfrei nachbildet.

Durch die Teile 13 bis 23 wird erreicht, daß für den Fall, daß die fehlersignifikante Signalkombination 0, 0 an den Ausgängen 15 und 16 nur während einer einzigen Taktperiode auftritt, das am Ausgang 17 der Ausgangsstufe 14 gespeicherte Signal, das für die Erkennung eines lokalen Verzögerungsfehlers in 13 als Initialisierungssignal dient, auf den Ausgang 11 durchgeschaltet wird und somit für eine Erkennung dieses Fehlers am Ausgang Af zur Verfügung steht. Bleibt jedoch die Signalkombination 0, 0 an den Ausgängen 15 und 16 während zweier aufeinanderfolgender Taktperioden bestehen, so wird das an 17 gespeicherte Signal vom Ausgang 11 abgeschaltet und durch das Ausgangssignal der fehlerfreien Nachbildung 23 ersetzt. Damit wird aber eine Fehlererkennung auf eine einzige Taktperiode beschränkt, zu deren Beginn der zur Fehlererkennung notwendige Signalwechsel an den Eingängen E1...En erfolgte. Die hierdurch bewirkte Reduzierung der Fehlererkennbarkeit eines Unterbrechungsfehlers auf eine einzige Taktperiode entspricht aber vollständig der gewünschten Simulation eines lokalen Verzögerungsfehlers in der zu untersuchenden Logikschaltung.

Fig. 3 zeigt eine von Fig. 2 abweichende Ausbildung des Simulationsmodells, das hier mit 12ʹ bezeichnet ist.

Hier ist eine fehlerfreie Nachbildung 23ʹ der zu überprüfenden Logikschaltung vorgesehen, deren beide Eingänge mit den Ausgängen 9 und 10 des Teils 1 der digitalen Schaltung verbunden sind. Der Ausgang 24 von 23ʹ ist über eine Ausgangsstufe 25, deren Ausgang mit 26 bezeichnet ist, an den ersten Eingang des Multiplexers 21 geführt, während der zweite Eingang von 21 mit dem Ausgang 24 beschaltet ist. Eine mit einem simulierten Unterbrechungsfehler versehene Ansteuerschaltung 27, die parallel zu 23ʹ über die Ausgänge 9 und 10 angesteuert wird, gibt beim Anlegen von Eingangssignalen, die zu einem von dem simulierten Unterbrechungsfehler nicht beeinflußten Ausgangssignal der Logikschaltung führen, über ihren Ausgang 28 eine logische "1" ab, welche die Ausgangsstufe 25 für die über 24 angelegten Signale durchlässig schaltet, so daß letztere an den Ausgang 26 gelangen. Wird jedoch über 9 und 10 ein eingangsseitiges Bitmuster an 12ʹ angelegt, daß zu einem vom simulierten Unterbrechungsfehler beeinflußten Signal am Ausgang der Logikschaltung führt, so tritt am Ausgang 28 das logische Signal "0" auf, das die Übertragung des gleichzeitig bei 24 anliegenden Signals auf den Ausgang 26 verhindert und stattdessen die Durchschaltung des letzten vor dem Unterbrechen des Signalweges 24-26 bei 24 aufgetretenen Signals weiter aufrecht erhält.

Das am Schaltungspunkt 28 auftretende, die Ausgangsstufe 25 steuernde Signal wird außerdem einem Inverter 29 zugeführt, dessen Ausgangssignal zum Auswerter 19 gelangt. Die übrigen Schaltungsteile der Fig. 3 entsprechen den gleichbezeichneten Schaltungsteilen von Fig. 2 nach Aufbau und Wirkungsweise. Auch hier wird beim Auftreten der Bedingung, daß an den Ausgängen 9 und 10 des Schaltungsteils 1 während der Dauer von zwei aufeinanderfolgenden Taktperioden Signale anliegen, die am Ausgang der zu prüfenden logischen Schaltung zu Ausgangssignalen führen, die von dem simulierten Unterbrechungsfehler beeinflußt sind, der Multiplexer 21 so angesteuert, daß anstelle des bei 26 anliegenden Signals das bei 24 anliegende, von dem Unterbrechungsfehler nicht beeinflußte Signal an den Ausgang 11 des Simulationsmodells 12ʹ durchgeschaltet wird. Durch diese Ansteuerung des Multiplexers 21 wird die Simulation eines Unterbrechungsfehlers erreicht, der nur für die Dauer einer Taktperiode auftritt, was aber der Simulation eines lokalen Verzögerungsfehlers entspricht.

Ein im Bell. Syst. Techn. Journ. Mai/Juni 1978 auf den Seiten 1455-1458, insbesondere anhand der Figuren 3 und 4 beschriebenes Simulationsmodell entspricht den Teilen 23ʹ, 25 und 27 der Fig. 3.

Der zwischen den Schaltungspunkten 18a und 20 von Fig. 2 liegende Auswerter 19 kann zweckmäßigerweise gemäß Fig. 4 ausgebildet sein. Dabei ist 18a mit dem Eingang eines D-Flipflops 29 verbunden. Der Ausgang Q desselben ist an den ersten Eingang eines NAND-Gatters 30 gelegt, dessen zweiter Eingang mit 18a verbunden ist. Der Ausgang von 30 entspricht dem Schaltungspunkt 20 von Fig. 2. Der Schaltungspunkt 19a stellt hierbei den Takteingang des D-Flipflops 29 dar. Liegt bei 18a eine logische "1" innerhalb eines Zeitraumes an, der länger ist als eine Taktperiode, so liegt eine logische "1" sowohl am Eingang D als auch am Ausgang Q von 29. Das bedeutet aber, daß der Ausgang des NAND-Gatters 30 auf "0" gelegt wird. Damit wird der Multiplexer 21 wie beschrieben von dem Ausgang 17 auf den Ausgang der fehlerfreien Nachbildung 23 umgeschaltet, so daß sich eine Simulation eines lokalen Verzögerungsfehlers gewährleistet ist. Ein nach Fig. 4 ausgebildeter Auswerter 19 kann auch in Fig. 3 eingesetzt werden.

Eine vorteilhafte Ausbildung des Multiplexers 21 ist in Fig. 5 dargestellt. Hierbei sind zwei NAND-Gatter 31 und 32 vorgesehen, deren erste Eingänge über einen Inverter 33 miteinander verbunden sind. Weiterhin ist der erste Eingang von 31 mit dem Ausgang 20 des Auswerters 19 beschaltet. Der zweite Eingang von 31 liegt beim Simulationsmodell 12 am Ausgang 17 der Ausgangsstufe 14, wobei der zweite Eingang von 32 dem Eingang 22 des Multiplexers 21 entspricht. Die Ausgänge der UND-Gatter 31 und 32 sind an die Eingänge eines ODER-Gatters 34 gelegt, dessen Ausgang den Ausgang 11 des Multiplexers darstellt. Im Falle des Simulationsmodells 12ʹ nach Fig. 3 liegt der zweite Eingang von 31 am Schaltungspunkt 26.

Fig. 6 zeigt die schaltungstechnische Durchbildung einer gemäß Fig. 2 in das Simulationsmodell 12 eingesetzten Nachbildungsstufe 13 und einer zugehörigen Ausgangsstufe 14, die zur Nachbildung eines NAND-Gatters mit zwei Eingängen in komplementärer Schaltungstechnik dienen. Dabei sind ein NAND-Gatter 35 und ein UND-Gatter 36 mit ihren ersten Eingängen an den Schaltungspunkt 9 gelegt, während ihre zweiten Eingänge mit dem Schaltungspunkt 10 verbunden sind. Der Ausgang von 35 ist an den S-Eingang eines RS-Flipflops 37 gelegt, der Ausgang von 36 an dessen R-Eingang. Der Ausgang Q des RS-Flipflops 37 entspricht dem Schaltungspunkt 17 von Fig. 2.

Ein Unterbrechungsfehler in einem der beiden Parallelzweige des nachgebildeten NAND-Gatters wird durch einen Haftfehler am ersten Eingang von 35 simuliert, ein Unterbrechungsfehler in dem anderen der beiden Parallelzweige durch einen Haftfehler am zweiten Eingang von 35. Diese beiden Haftfehler, die als "stuck-at-1"-Fehler ausgebildet sind, werden ihrerseits durch eine Abtrennung des jeweiligen Eingangs von dem Schaltungspunkt 9 bzw. 10 und durch das Anlegen eines Pegels, der einer logischen "1" entspricht, an den jeweils abgetrennten Eingang von 35 simuliert. Ein Unterbrechungsfehler im Serienzweig des nachgebildeten NAND-Gatters wird durch einen Haftfehler am Ausgang von 36 simuliert. Dieser Haftfehler wird als ein "stuck-at-0"-Fehler ausgebildet und in der Weise simuliert, daß der R-Eingang von 37 vom Ausgang des UND-Gatters 36 abgetrennt und mit einem Pegel belegt wird, der einer logischen "0" entspricht.

### Bezugszeichenliste

- 1: eingangsseitiger Teil einer digitalen Schaltung
- 2: ausgangsseitiger Teil der digitalen Schaltung
- 3: Inverter
- 4: Ausgang von 1
- 5: Eingang von 2
- 6: UND-Gatter
- 7: NOR-Gatter
- 8: UND-Gatter
- 9, 10: Ausgänge von 1
- 11: Eingang von 2
- 12: Simulationsmodell
- 13: Nachbildungsstufe
- 14: Ausgangsstufe
- 15, 16: Ausgänge von 13
- 17: Ausgnag von 14
- 18: Detektor
- 18a: Ausgang von 18
- 19: Auswerter
- 20: Ausgang von 19
- 21: Multiplexer
- 22: Eingang von 21
- 23, 23ʹ: Nachbildungen
- 24: Ausgang von 23ʹ
- 25: Ausgangsstufe
- 26: Ausgang von 25
- 27: Ansteuerschaltung
- 28: Ausgang von 27
- 29: Inverter
- 30, 31, 32: NAND-Gatter
- 33: Inverter
- 34: ODER-Gatter
- 35: NAND-Gatter
- 36: UND-Gatter
- 37: RS-Flipflop
- E1...En: digitale Eingänge
- A1...An: digitale Ausgänge

## Patentansprüche

1. Verfahren zur Simulation eines Verzögerungsfehlers in einer Logikschaltung mit Feldeffekttransistoren, bei dem von einer jeweils in aufeinanderfolgenden Taktperioden angelegten Folge von Eingangsbitmustern über ein den Fehler enthaltendes Simulationsmodell Ausgangsbitmuster abgeleitet werden, die mit für den fehlerfreien Fall geltenden Sollmustern verglichen werden, und bei dem zur Simulation eines Verzögerungsfehlers der Logikschaltung ein Simulationsmodell zur Simulation eines Unterbrechungsfehlers der Logikschaltung verwendet wird, **dadurch gekennzeichnet,** daß eine bei einem Unterbrechungsfehler auftretende Signalspeicherung durch die Funktion einer Ausgangsstufe des Simulationsmodells berücksichtigt wird, die ein an dem Ausgang der Logikschaltung auftretendes, durch den Unterbrechungsfehler nicht beeinflußtes Signal an ihren Ausgang durchschaltet, jedoch beim Auftreten eines durch den Unterbrechungsfehler beeinflußten Signals des unmittelbar vor diesem an dem Ausgang der Logikschaltung aufgetretenen Signals aufrecht erhält, und daß die Aufrechterhaltung der Durchschaltung nach einer einzigen Taktperiode beendet wird.

2. Verfahren nach Anspruch 1, **dadurch gekennzeichnet,** daß bei Beendigung der Durchschaltung des unmittelbar vorher am Ausgang der Logikschaltung aufgetretenen Signals das letztere durch das bei einer fehlerfreien Logikschaltung auftretende Ausgangssignal ersetzt wird.

3. Anordnung zur Durchführung des Verfahrens nach Anspruch 1 oder 2, **dadurch gekennzeichnet,** daß eine Nachbildungsstufe (13) vorgesehen ist, die in Verbindung mit einer nachgeschalteten, die Funktion eines RS-Flipflops nachbildenden Ausgangsstufe (14) eine mit einem Unterbrechungsfehler behaftete Logikschaltung simuliert, wobei die Ansteuerung der Ausgangsstufe (21) über zwei Ausgänge (15, 16) der Nachbildungsstufe (13) in der Weise erfolgt, daß ein an dem einen Ausgang (15) der Nachbildungsstufe (13) auftretendes Signal, das von dem Unterbrechungsfehler nicht beeinflußt ist, an den Ausgang (17) der ersten Ausgangsstufe (14) durchgeschaltet wird, und daß beim Auftreten eines vom dem Unterbrechungsfehler beeinflußten Signals an dem einem Ausgang (15) der Nachbildungsstufe (13) die Durchschaltung des unmittelbar vor diesem an dem einem Ausgang (15) der Nachbildungsstufe (13) aufgetretenen Signals aufrecht erhalten wird, daß ein an die beiden Ausgänge (15, 16) der Nachbildungsstufe (13) gelegter Detektor (18) vorgesehen ist, der beim Auftreten einer für den Unterbrechungsfehler signifikanten Signalbelegung an den beiden Ausgängen (15, 16) der Nachbildungsstufe (13) ein Ausgangssignal abgibt, das dem Eingang eines über einen Takteingang (19a) mit Taktimpulsen beaufschlagten Auswerters (19) zugeführt wird, und daß der Auswerter (19) mit dem Steuereingang eines Multiplexers (21) beschaltet ist, dessen erster Eingang mit dem Ausgang (17) der ersten Ausgangsstufe (14) verbunden ist, dessen zweiter Eingang mit dem Ausgang einer parallel gemeinsam mit der Nachbildungsstufe (13) angesteuerten, fehlerfreien Nachbildung (23) beschaltet ist und dessen Ausgang (11) den Ausgang der Anordnung (12) darstellt.

4. Anordnung zur Durchführung des Verfahrens nach Anspruch 1 oder 2, **dadurch gekennzeichnet,** daß eine die Funktion der zu prüfenden Logikschaltung simulierende, fehlerfreie Nachbildungsstufe (23') vorgesehen ist, der eine zweite Ausgangsstufe (25) mit einem Daten- und einem Steuereingang nachgeschaltet ist, wobei der Dateneingang der zweiten Ausgangsstufe (25) mit dem Ausgang (24) der fehlerfreien Nachbildungsstufe (23') verbunden ist, daß eine für den zu simulierenden Unterbrechungsfehler angelegte, parallel zur fehlerfreien Nachbildungsstufe (23') angesteuerte Ansteuerschaltung (27) vorhanden ist, deren Ausgang mit dem Steuereingang der zweiten Ausgangsstufe (25) beschaltet ist, daß die Ansteuerschaltung (27) beim Auftreten einer vom Unterbrechungsfehler nicht zu beeinflussenden Signalbelegung an den Eingängen der fehlerfreien Nachbildungsstufe (23') ein erstes Ausgangssignal (28, "1") abgibt, das den Ausgang der fehlerfreien Nachbildungsstufe (23') auf den Ausgang (26) der zweiten Ausgangsstufe (25) durchschaltet, beim Auftreten einer durch den Unterbrechungsfehler zu beeinflussenden Signalbelegung an den Eingängen der fehlerfreien Nachbildungsstufe (23') jedoch ein zweites Ausgangssignal (28, "0") abgibt, daß die Durchschaltung des unmittelbar vor dem Anlegen dieser letztgenannten Signalbelegung am Ausgang (24) der fehlerfreien Nachbildungsstufe (23') aufgetretenen Signals auf den Ausgang (26) der zweiten Ausgangsstufe (25) aufrecht erhält, daß das jeweilige Ausgangssignal der Ansteuerschaltung (27) einem Auswerter (19) zugeführt wird, der über einen Takteingang (19a) mit Taktimpulsen beaufschlagt ist, und daß der Auswerter (19) mit dem Steuereingang eines Multiplexers (21) beschaltet ist, dessen erster Eingang mit dem Ausgang (26) der zweiten Ausgangsstufe (25) verbunden ist, dessen zweiter Eingang mit dem Ausgang (24) der fehlerfreien Nachbildungsstufe (23') beschaltet ist und dessen Ausgang (11) den Ausgang der Anordnung (12') darstellt.

5. Anordnung nach einem der Ansprüche 3 oder 4, **dadurch gekennzeichnet,** daß der Auswerter (19) aus einem D-Flipflop (29) besteht, dessen Takteingang mit den Taktimpulsen beaufschlagt ist, und daß der Eingang und der Ausgang des D-Flipflops an die beiden Eingänge eines ersten NAND-Gatters (30) gelegt sind, dessen Ausgang mit dem Steuereingang des Multiplexers (21) verbunden ist.

6. Anordnung nach einem der Ansprüche 3 bis 5, **dadurch gekennzeichnet,** daß der Multiplexer (21) ein erstes und ein zweites UND-Gatter (31, 32) enthält, deren erste Eingänge über einen Inverter (33) miteinander verbunden sind, daß der zweite Eingang des ersten UND-Gatters (31) mit dem Ausgang (17, 26) der ersten bzw. zweiten Ausgangsstufe (14, 25) beschaltet ist, daß der zweite Eingang des zweiten UND-Gatters (32) mit dem Ausgang der fehlerfreien Nachbildung (23) bzw. der fehlerfreien Nachbildungsstufe (23') der Logikschaltung beschaltet ist und daß die Ausgänge des ersten und zweiten UND-Gatters (31, 32) an die Eingänge eines ODER-Gatters (34) gelegt sind, dessen Ausgang den Ausgang (11) des Multiplexers (21) darstellt.

7. Anordnung nach Anspruch 3, **dadurch gekennzeichnet,** daß die Nachbildungsstufe (13) die Funktion eines NAND-Gatters nachbildet und aus einem ersten NAND-Gatter (35) und einem zweiten UND-Gatter (36) besteht, deren erste Eingänge jeweils einen Eingang (9, 10) der Nachbildungsstufe (13) darstellen, daß ihre zweiten Eingänge jeweils mit dem ersten Eingang des jeweils anderen dieser beiden Gatter (36, 35) verbunden sind, und daß die Ausgänge des ersten NAND-Gatters (35) und des zweiten UND-Gatters (36) jeweils mit dem S-Eingang und dem R-Eingang eines die Ausgangsstufe (14) bildenden RS-Flipflops (37) beschaltet sind, dessen einer Ausgang den Ausgang der ersten Ausgangsstufe (14) darstellt, wobei der S- und der R-Eingang jeweils mit den Eingängen des Detektors (18) beschaltet sind.

## Claims

1. Method for simulating a delay fault in a logic circuit with field-effect transistors, in which output bit patterns are derived from a series of input bit patterns applied in successive clock periods in each case via a simulation model containing the fault, which output bit patterns are compared with reference patterns valid for the fault-free case, and in which, for simulating a delay fault of the logic circuit, a simulation model is used to simulate a stuck-open fault of the logic circuit, characterised in that a signal storage occurring in the case of a stuck-open fault is taken into account by the function of an output stage of the simulation model, which connects through to its output a signal that appears at the output of the logic circuit and is not influenced by the stuck-open fault, but when a signal influenced by the stuck-open fault appears, maintains [lacuna] of the signal appearing immediately previously thereto at the output of the logic circuit, and in that the maintenance of the through-connection is terminated after a single clock period.

2. Method according to Claim 1, characterised in that upon termination of the through-connection of the signal appearing immediately previously at the output of the logic circuit, said signal is replaced by the output signal appearing in the case of a fault-free logic circuit.

3. Arrangement for carrying out the method according to Claim 1 or 2, characterised in that a simulation stage (13) is provided, which simulates a logic circuit affected by a stuck-open fault in connection with a downstream output stage (14) simulating the function of an RS flip-flop, the output stage (21) being driven via two outputs (15, 16) of the simulation stage (13) in such a way that a signal appearing at one output (15) of the simulation stage (13) which is not influenced by the stuck-open fault is connected through to the output (17) of the first output stage (14), and in that upon the appearance of a signal influenced by the stuck-open fault at one output (15) of the simulation stage (13), the through-connection of the signal appearing immediately previously thereto at one output (15) of the simulation stage (13) is maintained, in that a detector (18) connected to the two outputs (15, 16) of the simulation stage (13) is provided, which outputs an output signal to the two outputs (15, 16) of the simulation stage (13) upon the appearance of a signal state that is significant for the stuck-open fault, which output signal is supplied to the input of an evaluator (19) which receives clock pulses via a clock input (19a), and in that the evaluator (19) is connected to the control input of a multiplexer (21), the first input of which is connected to the output (17) of the first output stage (14), the second input of which is connected to the output of a fault-free simulation means (23) driven in parallel together with the simulation stage (13), and the output (11) of which constitutes the output of the arrangement (12).

4. Arrangement for carrying out the method according to Claim 1 or 2, characterised in that a fault-free simulation stage (23') which simulates the function of the logic circuit to be tested is provided, downstream of which a second output stage (25) with a data input and a control input is connected, the data input of the second output stage (25) being connected to the output (24) of the fault-free simulation stage (23'), in that a drive circuit (27) applied for the stuck-open fault to be simulated and driven in parallel with the fault-free simulation stage (23') is provided, the output of which is connected to the control input of the second output stage (25), in that the drive circuit (27) outputs a first output signal (28, "1") upon the appearance of a signal state not to be influenced by the stuck-open fault at the inputs of the fault-free simulation stage (23'), which output signal (28, "1") connects through the output of the fault-free simulation stage (23') to the output (26) of the second output stage (25), but outputs a second output signal (28, "0") upon the appearance of a signal state to be influenced by the stuck-open fault at the inputs of the fault-free simulation stage (23'), in that the through-connection of the signal appearing immediately previously to the application of said last-mentioned signal state at the output (24) of the fault-free simulation stage (23') to the output (26) of the second output stage (25) is maintained, in that the respective output signal of the drive circuit (27) is supplied to an evaluator (19), which receives clock pulses via a clock input (19a), and in that the evaluator (19) is connected to the control input of a multiplexer (21), the first input of which is connected to the output (26) of the second output stage (25), the second input of which is connected to the output (24) of the fault-free simulation stage (23'), and the output (11) of which constitutes the output of the arrangement (12').

5. Arrangement according to one of Claims 3 or 4, characterised in that the evaluator (19) comprises a D-type flip-flop (29), the clock input of which receives the clock pulses, and in that the input and the output of the D-type flip-flop are connected to the two inputs of a first NAND gate (30), the output of which is connected to the control input of the multiplexer (21).

6. Arrangement according to one of Claims 3 to 5, characterised in that the multiplexer (21) contains a first and a second AND gate (31, 32), the first inputs of which are connected to one another via an inverter (33), in that the second input of the first AND gate (31) is connected to the output (17, 26) of the first and second output stage (14, 25) respectively, in that the second input of the second AND gate (32) is connected to the output of the fault-free simulation means (23) or the fault-free simulation stage (23') of the logic-circuit, and in that the outputs of the first and second AND gates (31, 32) are connected to the inputs of an OR gate (34), the output of which constitutes the output (11) of the multiplexer (21).

7. Arrangement according to Claim 3, characterised in that the simulation stage (13) simulates the function of a NAND gate and comprises a first NAND gate (35) and a second AND gate (36), the first inputs of which constitute in each case one input (9, 10) of the simulation stage (13), in that their second inputs are connected in each case to the first input of the respective other of these two gates (36, 35), and in that the outputs of the first NAND gate (35) and of the second AND gate (36) are connected in each case to the S input and to the R input of an RS flip-flop (37) forming the output stage (14), one output of which RS flip-flop constitutes the output of the first output stage (14), the S and the R input being connected in each case to the inputs of the detector (18).

## Revendications

1. Procédé pour simuler un défaut de retard dans un circuit logique à transistors à effet de champ, dans lequel, à partir d'une suite de configurations binaires d'entrée appliquées dans des périodes d'horloges successives et par l'intermédiaire d'un modèle de simulation comportant le défaut, on dérive des configurations binaires de sortie qui sont comparées à des configurations théoriques s'appliquant au cas sans défaut, et dans lequel, pour simuler un défaut de retard du circuit logique, un modèle de simulation pour simuler un défaut d'interruption du circuit logique est utilisé, caractérisé en ce qu'une mémorisation de signal intervenant lors d'un défaut d'interruption, est prise en compte par la fonction d'un étage de sortie du modèle de simulation, qui transmet par sa sortie un signal se produisant à la sortie du circuit logique et qui n'est pas influencé par le défaut d'interruption, alors que, à l'apparition d'un signal influencé par le défaut d'interruption, cet étage de sortie maintient le passage du signal qui se produit directement avant le signal influencé par le défaut d'interruption à la sortie du circuit logique, et en ce que le maintien du passage du signal prend fin après une période unique.

2. Procédé selon la revendication 1, caractérisé en ce qu'à la fin du passage du signal se produisant directement auparavant à la sortie du circuit logique, ce dernier est substitué au signal de sortie se produisant pour un circuit logique sans défaut.

3. Dispositif pour la mise en oeuvre du procédé selon la revendication 1 ou 2, caractérisé en ce qu'il est prévu un étage de simulation (13) qui, en liaison avec un étage de sortie (14) monté en aval et simulant la fonction d'un multivibrateur RS, simule un circuit logique affecté d'un défaut d'interruption, du type dans lequel l'attaque de l'étage de sortie (21) s'effectue de telle façon par l'intermédiaire des deux sorties (15, 16) de l'étage de simulation (13), qu'un signal qui apparaît à l'une (15) des sorties de l'étage de simulation (17) et qui n'est pas influencé par le défaut d'interruption, est transmis à la sortie (17) du premier étage de sortie (14), et que, à l'apparition, à l'une (15) des sorties de l'étage de simulation (13), d'un signal influencé par le défaut d'interruption, le passage du signal se produisant directement avant celui-ci, à l'une (15) des sorties de l'étage de simulation (13), est maintenu, en ce qu'il est prévu un détecteur (18) qui est relié aux deux sorties (15, 16) de l'étage de simulation (13) et qui, à l'apparition, au niveau des deux sorties (15, 16) de l'étage de simulation (13), d'une occupation de signal significative pour le défaut d'interruption, un signal de sortie qui est envoyé à l'entrée d'un évaluateur (19) soumis aux impulsions d'horloge par une entrée d'horloge (19a), et en ce que l'évaluateur (19) est relié à l'entrée de commande d'un multiplexeur (21) dont la première entrée est reliée à la sortie (17) du premier étage de sortie (14), dont la deuxième entrée est reliée à la sortie d'un simulateur (23) sans défaut qui est commandé parallèlement et en commun avec l'étage de simulation (13), et dont la sortie (11) représente la sortie du dispositif.

4. Dispositif pour la mise en oeuvre du procédé selon la revendication 1 ou 2, caractérisé en ce qu'il est prévu un étage de simulation (23') sans défaut qui simule la fonction du circuit logique à tester et auquel est relié en aval un deuxième étage de sortie (25) à entrée de données et à entrée de commande, du type dans lequel l'entrée de données du deuxième étage de sortie (25) est reliée à la sortie (24) de l'étage de simulation (23') sans défaut, en ce qu'il est prévu un circuit de commande ou d'attaque (27) qui est conçu pour le défaut d'interruption à simuler, qui est commandé en parallèle avec l'étage de simulation (23') sans défaut et dont la sortie est reliée à l'entrée de commande du deuxième étage de sortie (25), en ce que le circuit de commande (27) délivre, à l'apparition, aux entrées de l'étage de simulation (23') sans défaut, d'une occupation de signal qui n'est pas à influencer par le défaut d'interruption, un premier signal de sortie (28, "1") qui relie la sortie de l'étage de simulation (23') sans défaut à la sortie (26) du deuxième étage de sortie (25), alors que ce circuit de commande délivre, à l'apparition, aux entrées de l'étage de simulation (23') sans défaut, d'une occupation de signal à influencer par le défaut d'interruption, un deuxième signal de sortie (28, "0"), en ce que le passage du signal se produisant à la sortie (24) de l'étage de simulation (23') sans défaut directement avant l'application de cette occupation de signal précédemment citée, est maintenu à la sortie (26) du deuxième étage de sortie (25), en ce que chaque signal de sortie du circuit de commande (27) est transmis à un évaluateur (19) qui est soumis à des impulsions d'horloge par une entrée d'horloge (19a), et en ce que l'évaluateur (19) est relié à l'entrée de commande d'un multiplexeur (21) dont la première entrée est reliée à la sortie (26) du deuxième étage de sortie (25), dont la seconde entrée est reliée à la sortie (24) de l'étage de simulation (23') sans défaut, et dont la sortie (11) représente la sortie du dispositif (12').

5. Dispositif selon l'une des revendications 3 ou 4, caractérisé en ce que l'évaluateur (19) comporte un multivibrateur D (29) dont l'entrée d'horloge est soumise à des impulsions d'horloge, et en ce que l'entrée et la sortie du multivibrateur D sont appliquées aux deux entrées d'une premier porte NON-ET (30) dont la sortie est reliée à l'entrée de commande du multiplexeur (21).

6. Dispositif selon l'une des revendications 3 à 5, caractérisé en ce que le multiplexeur (21) comporte une première et une deuxième porte ET (31, 32), dont les premières entrées sont reliées entre elles par l'intermédiaire d'un inverseur (33), en ce que la seconde entrée de la première porte ET (31) est reliée à la sortie (17, 26) du premier et du deuxième étage de sortie (14, 25), en ce que la deuxième entrée de la deuxième porte ET (32) est reliée à la sortie du simulateur (23) sans défaut ou à la sortie de l'étage de simulation (23') sans défaut du circuit logique, et en ce que les sorties de la première et de la deuxième porte ET (31, 32) sont appliquées aux entrées d'une porte OU (34) dont la sortie représente la sortie (11) du multiplexeur (21).

7. Dispositif selon la revendication 3, caractérisé en ce que l'étage de simulation (13) simule la fonction d'une porte NON-ET et est constitué par une première porte NON-ET (35) et par une deuxième porte ET (36), dont les premières entrées représentent respectivement une entrée (9, 10) de l'étage de simulation (13), en ce que leurs secondes entrées sont reliées respectivement à la première entrée de l'autre de ces deux portes (36, 35), et en ce que les sorties de la première porte NON-ET (35) et de la deuxième porte ET (36) sont reliées respectivement à l'entrée S et à l'entrée R d'un multivibrateur RS (37) formant l'étage de sortie (14) dont une sortie représente la sortie du premier étage de sortie (14), l'entrée S et l'entrée R étant reliées respectivement aux entrées du détecteur (18).
